(19) Europäisches Patentamt
European Patent Office
Office européen des brevets

(11) **EP 2 151 708 A1**

(12) **EUROPEAN PATENT APPLICATION**
published in accordance with Art. 153(4) EPC

(43) Date of publication:
**10.02.2010 Bulletin 2010/06**

(51) Int Cl.:
*G02F 1/1335* (2006.01)    *G02F 1/1337* (2006.01)
*G02F 1/1368* (2006.01)

(21) Application number: **08711192.8**

(22) Date of filing: **13.02.2008**

(86) International application number:
**PCT/JP2008/052334**

(87) International publication number:
**WO 2008/149580 (11.12.2008 Gazette 2008/50)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **05.06.2007 JP 2007149593**

(71) Applicant: **Sharp Kabushiki Kaisha**
**Osaka-shi, Osaka 545-8522 (JP)**

(72) Inventors:
• **FUJIOKA, Kazuyoshi**
**Osaka-shi, OSAKA 545-8522 (JP)**
• **HONGO, Koki**
**Osaka-shi, OSAKA 545-8522 (JP)**
• **FURUKAWA, Tomoo**
**Osaka-shi, OSAKA 545-8522 (JP)**
• **OGAWA, Katsuya**
**Osaka-shi, OSAKA 545-8522 (JP)**

(74) Representative: **Müller - Hoffmann & Partner Patentanwälte**
**Innere Wiener Strasse 17**
**81667 München (DE)**

(54) **LIQUID CRYSTAL DISPLAY**

(57) A liquid crystal display of a CPA mode includes: an active matrix substrate (20) including a plurality of pixel electrodes (23); a counter substrate (30) provided so as to face the active matrix substrate (20), the counter substrate (30) including a common electrode (33); a liquid crystal layer (40) held between the active matrix substrate (20) and the counter substrate (30); and a plurality of pixels (10), the plurality of pixel electrodes (23) being provided at a constant gap from the common electrode (33), the plurality of pixels (10) each having a reflective display region (R) and a transmissive display region (T), the reflective display region (R) for performing display of a transmissive mode, the reflective display region (R) including an alignment control section (4) which makes a thickness (d2) of part of the liquid crystal layer (40) in the reflective display region (R) smaller than a thickness (d1) of the liquid crystal layer (40) in the transmissive display region (T) and which controls alignment direction of liquid crystal molecules in the liquid crystal layer (40). With the configuration, it is possible to prevent deterioration in display quality in the transmissive mode and the reflective mode as well as to substantially equalize response speed in these modes, in the liquid crystal display of the CPA mode including the transmissive display region and the reflective display region.

F I G. 2

**Description**

Technical Field

The present invention relates to a liquid crystal display, and particularly relates to a liquid crystal display in which display of both a reflective mode and transmissive mode are possible, and is suitable for a vertical alignment mode in which a liquid crystal layer is in a vertically aligned state while no voltage is applied to the liquid crystal layer.

Background Art

There has been known what is called a semi-transmissive liquid crystal display, which includes in each pixel which is a smallest unit of an image and is arranged in a matrix form, a transmissive display region that carries out display of a transmissive mode by transmitting light emitted by a backlight, and a reflective display region that carries out display of a reflective mode by reflecting outside light.

As such a semi-transmissive liquid crystal display, there has been proposed a liquid crystal display including a reflective film (which is made of a metal film such as aluminum film) on an inside surface of a substrate closer to a light source, which reflective film has window sections for light transmission and functions as a semi-transmissive reflective plate. In the reflective mode, outside light having entered through a substrate closer to an observer passes through a liquid crystal layer held between the substrate closer to the observer and the substrate closer to the light source, and is reflected at the reflective film provided on the inner surface of the substrate closer to the light source. Then, the outside light thus reflected again passes through the liquid crystal layer, and is emitted through the substrate closer to the observer so as to contribute to display. On the other hand, in the transmissive mode, light emitted by a light source having entered through the substrate closer to the light source passes through the window sections of the reflective film and the liquid crystal layer, and then is emitted through the substrate closer to the observer so as to contribute to display. As described above, among a region in which the reflective film is provided, a region in which the window sections are provided is a transmissive display region, whereas a region other than the transmissive display region is a reflective display region.

In such a semi-transmissive liquid crystal display, since the transmissive display region is structured such that light passes through the liquid crystal layer only once and the reflective display region is structured such that light passes the liquid crystal layer twice, each region has a different retardation. Here, the retardation is an important factor which influences characteristics, such as transmittance and viewing angle, of a liquid crystal display, and is represented by product $\Delta n \cdot d$ of a reflactive index anisotropy $\Delta n$ of liquid crystal molecules and a thickness d of the liquid crystal layer. Thus, in the semi-transmissive liquid crystal display, if the retardation of the transmissive display region is $\Delta n \cdot d$, then the retardation of the reflective display region is $2\Delta n \cdot d$. Although the retardation is different between the transmissive display region and the reflective display region, alignment of the liquid crystal molecules in both regions are controlled by applying a same drive voltage to the liquid crystal layer in both regions. As a result, a voltage-transmittance characteristic of the transmissive display region and a voltage-reflectance characteristic of the reflective display region are different from each other, thereby causing deterioration in display quality.

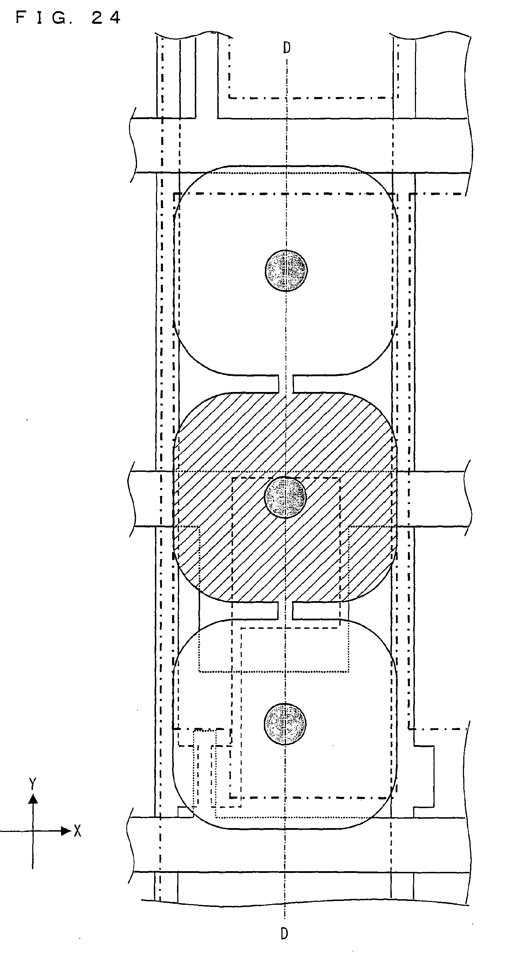

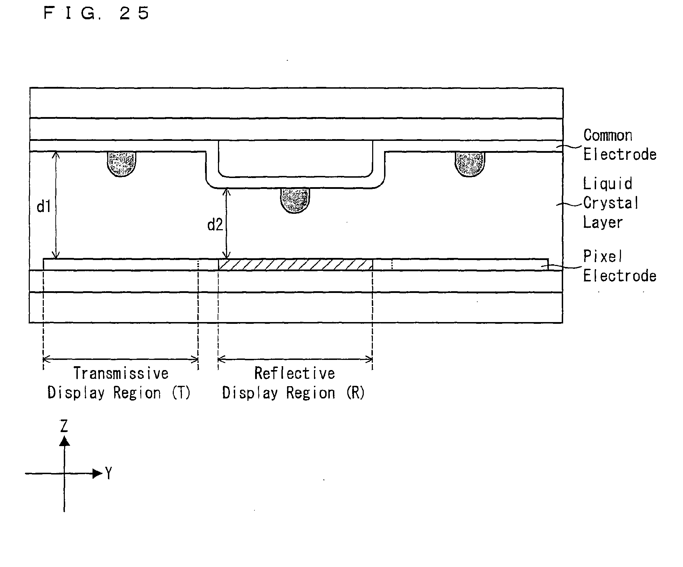

In order to solve this problem, Patent Literature 1 discloses a liquid crystal display, which is configured such that a liquid crystal layer in the transmissive display region and a liquid crystal layer in the reflective display region are different from each other in terms of thickness so as to achieve an identical retardation. Fig. 24 is a plan view illustrating one pixel of a conventional liquid crystal display. Fig. 25 is a cross-sectional view illustrating the pixel, taken on line D-D in Fig. 24.

Specifically, as illustrated in Fig. 25, the liquid crystal display is arranged such that a thickness d2 of the liquid crystal layer in a reflective display region R is substantially half a thickness d1 of the liquid crystal layer in a transmissive display region T. Note that the liquid crystal display is arranged such that a distance between a pixel electrode and a common electrode corresponds to a thickness of the liquid crystal layer. With this arrangement, since the retardation in each region can be made substantially identical, it is possible to achieve a state where a voltage-transmittance characteristic of the transmissive display region T and a voltage-reflectance characteristic of the reflective display region R are substantially identical. As such, it is possible to prevent deterioration in display quality due to a difference of retardation.

Citation List

Patent Literature 1
Japanese Patent Application Publication, Tokukai, No. 2006-78524 A (Publication Date: March 23, 2006)

Summary of Invention

However, in the conventional configuration, not only a distance between electrodes, but also a thickness of the liquid crystal layer is different between in the transmissive display region and in the reflective display region. Therefore, although it is possible to prevent deterioration in display quality, each region has different response speed.

Generally, the response speed of liquid crystal molecules is correlated with a voltage applied to the liquid crystal layer and a thickness of the liquid crystal layer. For example, the response speed of the liquid crystal molecules decreases as the thickness of the liquid crystal layer increases, whereas the response speed of the liquid crystal molecules increases as the thickness of the liquid crystal layer decreases.

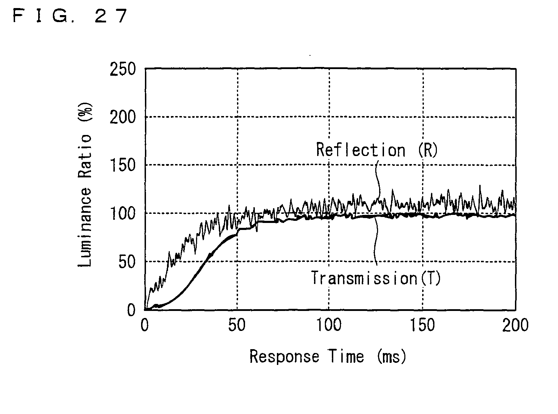

Fig. 27 is a graph illustrating a relation between response speed and a luminance ratio in a transmissive display region and a reflective display region of a semi-transmissive liquid crystal display illustrated in Figs. 24 and 25. Note that in the semi-transmissive liquid crystal display, a thickness d1 of the liquid crystal layer in the transmissive display region is 3.4 $\mu$m, a thickness d2 of the liquid crystal layer in the reflective display region is 1.7 $\mu$m, a reflactive index anisotropy $\Delta$n of liquid crystal molecules is 0.098, a dielectric anisotropy $\Delta\varepsilon$ of a liquid crystal material is -3.1, and a dielectric anisotropy $\Delta\varepsilon$ of an alignment control section is 4. As seen in Fig. 27, the reflective display region exhibits a faster response speed versus the luminance ratio than the transmissive display region.

As described above, in the conventional transmissive liquid crystal display, the response speed is different between in the transmissive display region and in the reflective display region, thereby causing an after image etc. that leads to deterioration in display quality. Especially in a CPA (Continuous Pinwheel Alignment) mode, which is applied to recent liquid crystal displays and is capable of efficiently securing apertures of the transmissive display region and the reflective display region, the difference in the response speed further expands, as is well known. As described above, an aperture ratio and the response speed are in a trade-off relationship. Therefore, it is difficult in the conventional liquid crystal display of the CPA mode to prevent deterioration in display quality due to the difference in retardation as well as to reduce the difference in the response speed.

The present invention has been made in view of the foregoing problems, and an object thereof is to prevent deterioration in display quality both in a transmissive mode and in a reflective mode as well as to substantially equalize response speed in the transmissive mode and the reflective mode in a liquid crystal display of a CPA mode including a transmissive display region and a reflective display region.

In order to attain the object, a liquid crystal display of the present invention is a liquid crystal display of a vertical alignment mode, including: an active matrix substrate including a plurality of pixel electrodes; a counter substrate provided so as to face the active matrix substrate, the counter substrate including a common electrode; a liquid crystal layer held between the active matrix substrate and the counter substrate, the liquid crystal layer containing liquid crystal molecules; and a plurality of pixels arranged in a matrix form, the liquid crystal display employing a CPA mode in which the liquid crystal molecules are aligned substantially perpendicular to surfaces of the active matrix substrate and the counter substrate while no voltage is applied to the liquid crystal layer whereas the liquid crystal molecules are aligned in a radial pattern while a voltage is applied to the liquid crystal layer, the plurality of pixel electrodes being provided at a constant gap from the common electrode, the plurality of pixels each having a reflective display region and a transmissive display region provided around the reflective display region, the reflective display region for performing display of a reflective mode by reflecting outside light with a reflective electrode provided on the active matrix substrate, the transmissive display region for performing display of a transmissive mode by transmitting light emitted by a light source, the reflective display region including an alignment control section which makes the liquid crystal layer thinner in a part of the reflective display region than in the transmissive display region and which controls an alignment direction of the liquid crystal molecules in the liquid crystal layer.

According to this arrangement, the liquid crystal display of the CPA mode, which includes the reflective display region and the transmissive display region and performs display of the reflective mode and display of the transmissive mode, is configured such that: the plurality of pixel electrodes are provided at a constant gap from the common electrode; and the reflective display region performing display of the reflective mode includes the alignment control section which makes the liquid crystal layer thinner in a part of the reflective display region than in the transmissive display region and which controls an alignment direction of the liquid crystal molecules in the liquid crystal layer.

With this arrangement, the reflective display region is constituted by two regions which are different from each other in terms of the thickness of the liquid crystal layer. Out of the two regions, a region in which a thinner liquid crystal layer is provided (hereinafter referred to as a second reflective display region) includes the alignment control section. Accordingly, a voltage is less likely to be applied to the liquid crystal layer in the second reflective display. As such, in the reflective display region, the second reflective display region (one region) and a first reflective region (the other region) exhibit a different voltage-reflectance characteristic from each other.

Specifically, since the second reflective display region is provided with the alignment control section, a voltage drops compared with a voltage applied to the liquid crystal layer. Accordingly, a voltage effectively applied to the liquid crystal layer in the second reflective display region is smaller than that effectively applied to the liquid crystal layer in the first reflective display region. As a result, a reflectance versus a voltage applied to the second reflective display region is smaller than a reflectance versus a voltage applied to the first reflective display region. On the other hand, the reflectance versus the voltage applied to the first reflective display region is larger than a transmittance in the transmissive display region. Further, if a voltage larger than a predetermined voltage is applied to the first reflective display region, the reflectance decreases according to the voltage applied, i.e., so-called inverse phenomenon occurs. As a result, the reflectance of the first reflective display region becomes smaller than the reflectance in the second reflective display region and the transmittance in the transmissive display region.

Accordingly, the voltage-reflectance characteristic of the reflective display region, which is obtained by synthesizing the voltage-reflectance characteristic of the first reflective display region and the voltage-reflectance characteristic of the second reflective display region, is close to the voltage-transmittance characteristic of the transmissive display region. As a result, the configuration does not cause deterioration in display quality unlike the conventional configuration.

Further, according to the configuration described above, the pixel electrodes are provided at a constant gap from the common electrode, and the reflective display region is constituted by regions (the first reflective display region and the second reflective display region) different from each other in terms of a thickness of the liquid crystal layer. Specifically, in the configuration, the pixel electrodes are provided at a constant gap from the common electrode, and the liquid crystal layer in the second reflective display region is thinner than the liquid crystal layer in the first reflective display region.

Generally, the response speed of the liquid crystal molecules is correlated with the voltage applied to the liquid crystal layer and with the thickness of the liquid crystal layer. For example, the response speed decreases as the thickness of the liquid crystal layer increases, whereas the response speed increases as the thickness of the liquid crystal layer decreases. Therefore, in the second reflective display region, the response speed is normally faster than that in the transmissive display region.

However, the present invention is configured such that the liquid crystal layer in the second display region is thin due to the alignment control section, although a distance between the pixel electrodes and the common electrode is constant. Therefore, in the second reflective display region, the voltage effectively applied to the liquid crystal layer is small due to the effect of the voltage drop caused by the alignment control section. As a result, the response speed does not increase. As such, with the configuration of the present invention, it is possible to prevent the response speed from increasing even if the liquid crystal layer is thin, because the voltage drop occurs due to the alignment control section. Thus, it is possible to reduce a difference in response speed between in the reflective display region and in the transmissive display region in comparison with the conventional configuration.

As described above, according to the configuration of the present invention, it is possible to substantially equalize display performance both in the reflective mode and in the transmissive mode so as to prevent deterioration in display quality as well as to substantially equalize the response speed both in the reflective mode and in the transmissive mode, by providing the alignment control section, which causes the voltage drop, in a configuration in which the distance between the pixel electrodes and the common electrode is constant so that the reflective display region is separated into regions different from each other in terms of thickness of the liquid crystal layer.

The reflective electrode provided in the reflective display region may be provided inside each of the pixel electrodes, and may also be provided on or as a lower layer of each of the pixel electrodes. According to a configuration in which the reflective electrode is provided inside each of the pixel electrodes, it is possible to equalize (i) a distance between the reflective electrode and the common electrode and (ii) the distance between each of the pixel electrodes and the common electrode. Further, according to a configuration in which the reflective electrode is provided on or as a lower layer of each of the pixel electrodes, it is possible to substantially equalize (i) the distance between the reflective electrode and the common electrode and (ii) the distance between each of the pixel electrodes and the common electrode.

The liquid crystal display device of the present invention is preferably arranged, in the above configuration, such that the alignment control section separates the reflective display region into a first reflective display region and a second reflective display region different from each other in terms of a thickness of the liquid crystal layer, and a voltage-reflectance characteristic obtained by synthesizing a voltage-reflectance characteristic in the first reflective display region and a voltage-reflectance characteristic in the second reflective display region is substantially identical to a voltage-transmittance characteristic in the transmissive display region.

With the arrangement, since it is possible to substantially equalize the voltage-reflectance characteristic in the reflective display region and the voltage-transmittance characteristic in the transmissive display section, it is possible to surely prevent deterioration in display quality.

The liquid crystal display device of the present invention is preferably arranged, in the above configuration, such that each of the pixel electrodes in the pixels is separated into a plurality of sub-electrodes, and at least one of the plurality of sub-electrodes includes (i) the reflective display region for performing display of the reflective mode by reflecting outside light with the reflective electrode provided on the active matrix substrate and (ii) the transmissive display region, provided around the reflective display region, for performing display of the transmissive mode.

With the arrangement, since the pixel electrode is separated into the sub-electrodes each of which includes the reflective display region and the transmissive display region, it is possible to improve the aperture ratio, as well as to attain the effects as described above.

The liquid crystal display device of the present invention is preferably arranged, in the above configuration, such that each of the pixel electrodes in the pixels is separated into a plurality of sub-electrodes, and each of the plurality of sub-electrodes is constituted by one of (i) the reflective display region for performing display of the reflective mode by reflecting outside light with the reflective electrode provided on the active matrix substrate, and (ii) the transmissive display region, provided around the reflective display region, for performing display of the transmissive mode.

With the arrangement, each of the sub-electrodes constituted by the reflective display region is provided only with the reflective electrode, whereas each of the sub-electrodes constituted by the transmissive display region is not provided with the reflective electrode. Accordingly, it is possible to efficiently form the reflective display region and the transmissive display region for example in a layer in which TFTs, source signal lines, and gate signal lines are provided. Thus, it is possible to improve the reflectance and the transmittance of the liquid crystal display, as well as to attain the effects as described above.

The liquid crystal display device of the present invention is preferably arranged, in the above configuration, such that the alignment control section separates the reflective display region into a first reflective display region and a second reflective display region different from each other in terms of a thickness of the liquid crystal layer, and is configured such that in gray scale levels that contribute to display, a ratio of an inverse reflectance to a maximum reflectance in a voltage-reflectance characteristic obtained by synthesizing a voltage-reflectance characteristic in the first reflective display region and a voltage-reflectance characteristic in the second reflective display region is 20 percentage or less.

Here, the inverse transmittance is a transmittance that is lower than the maximum transmittance, obtained when a voltage higher than a voltage which achieves the maximum transmittance is applied.

With the arrangement, since inversed display is not visible anymore, display quality is not influenced. Thus, it is possible to prevent deterioration in display quality.

The liquid crystal display device of the present invention is preferably arranged, in the above configuration, such that the transmissive display region includes an alignment control section for controlling an alignment direction of the liquid crystal molecules in the liquid crystal layer, and a size of the alignment control section in the reflective display region and a size of the alignment control section in the transmissive display region are determined depending on a size of the reflective display region and a size of the transmissive display region, respectively.

With the arrangement, it is possible to substantially equalize the display properties and the response speed in all display regions (the reflective display region and the transmissive display region).

The liquid crystal display device of the present invention is preferably arranged, in the above configuration, such that the reflective electrode is provided as a lower layer of each of the sub-electrodes.

With the arrangement, since a wire electrode provided below each of the sub-electrodes, such wire electrode as a gate signal line and a source signal line, can be utilized as the reflective electrode, it is possible to reduce cost of the liquid crystal display. It is also possible to simplify the manufacturing process.

The liquid crystal display device of the present invention is preferably arranged, in the above configuration, such that the liquid crystal display employs an overshoot drive.

In a conventional liquid crystal display, the response speed is faster in the reflective display region than in the transmissive display region. Therefore, if an overshoot drive suitable for a response characteristic of the transmissive display region is performed, a voltage applied to the reflective display region is too large. As a result, especially during a halftone display period, a so-called angular response occurs, thereby causing white after images. On the other hand, if an overshoot drive suitable for a response characteristic of the reflective display region is performed, it is not possible to sufficiently improve the response speed in the transmissive display region. As a result, black after images appear during the halftone display period. Therefore, in the conventional liquid crystal display, the overshoot drive cannot be employed under an identical condition, but needs to be employed under different conditions for the transmissive display region and for the reflective display region. This makes the configuration of the liquid crystal display complicated, thereby increasing cost of the liquid crystal display.

In contrast, since the liquid crystal display of the present invention is configured such that the distance between each of the pixel electrodes and the common electrode is constant and the alignment control section that causes the voltage drop is provided so as to separate the reflective display region into regions different from each other in terms of a thickness of the liquid crystal layer, it is possible to substantially equalize the response speed in the reflective display region and the transmissive display region, as described above.

Therefore, even if the overshoot drive is employed under the identical condition both in the reflective display region and in the transmissive display region, the angular response that is large enough to significantly deteriorate display quality does not occur unlike the conventional liquid crystal display, and it is possible to improve the response speed both in the reflective display region and in the transmissive display region. As such, by employing the overshoot drive, it is possible to improve the response speed, as well as to attain the effects as described above.

For a fuller understanding of the nature and advantages of the invention, reference should be made to the ensuing detailed description taken in conjunction with the accompanying drawings.

Brief Description of Drawings

Fig. 1

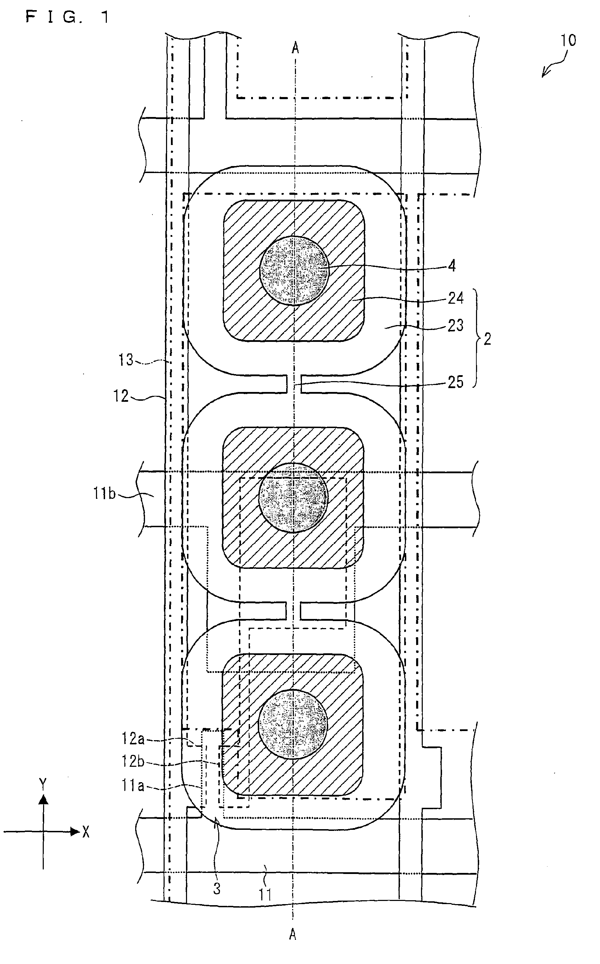

Fig. 1 is a plan view illustrating one pixel included in an active matrix substrate of a liquid crystal display according to the present embodiment.
Fig. 2

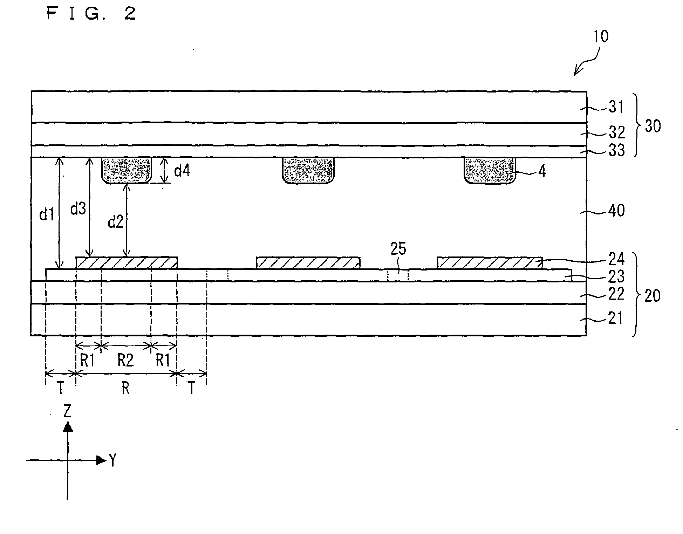

Fig. 2 is a cross-sectional view illustrating a pixel taken on line A-A in Fig. 1.
Fig. 3

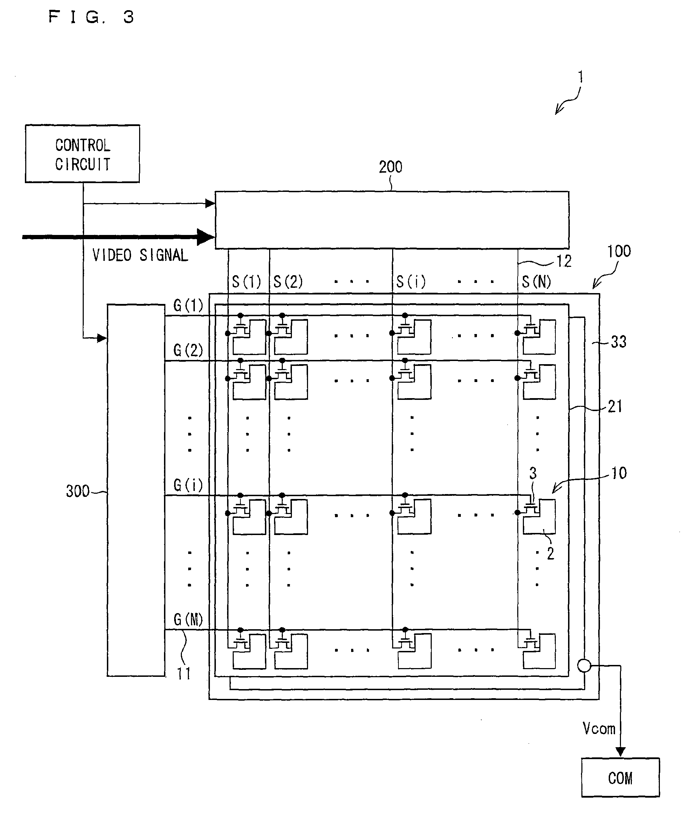

Fig. 3 is a plan view schematically illustrating a liquid crystal display according to the present embodiment.
Fig. 4

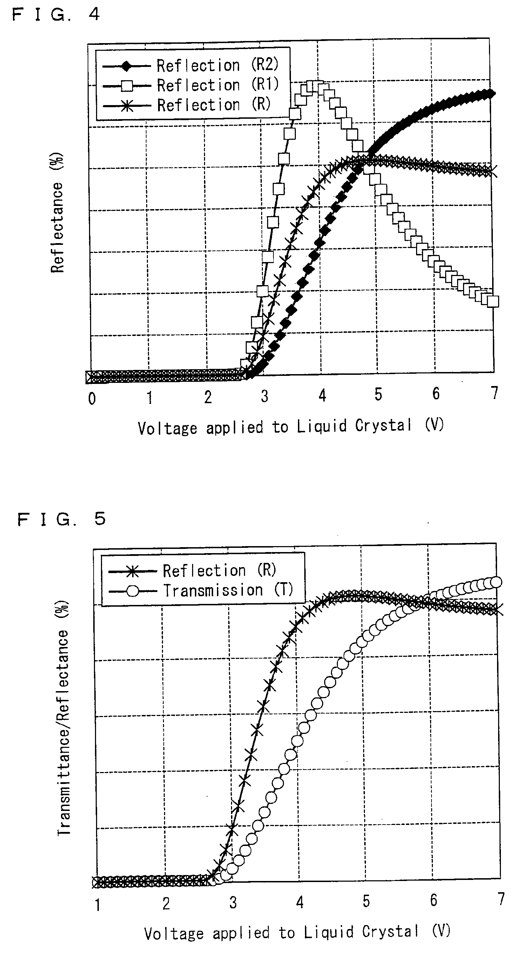

Fig. 4 is a graph illustrating a voltage-reflectance characteristic of a reflective display region in a liquid crystal display according to the present embodiment.
Fig. 5
Fig. 5 is a graph illustrating a voltage-reflectance characteristic of a reflective display region and a voltage-transmittance characteristic of a transmissive display region, in a liquid crystal display according to the present embodiment.
Fig. 6

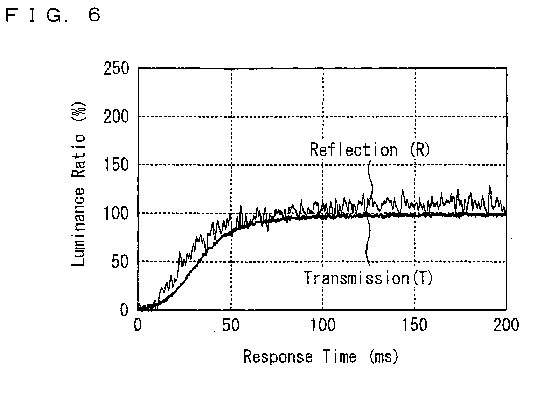

Fig. 6 is a graph illustrating a relationship between response time and luminance ratio of each of the transmissive display region and reflective display region, in a liquid crystal display according to the present embodiment.
Fig. 7

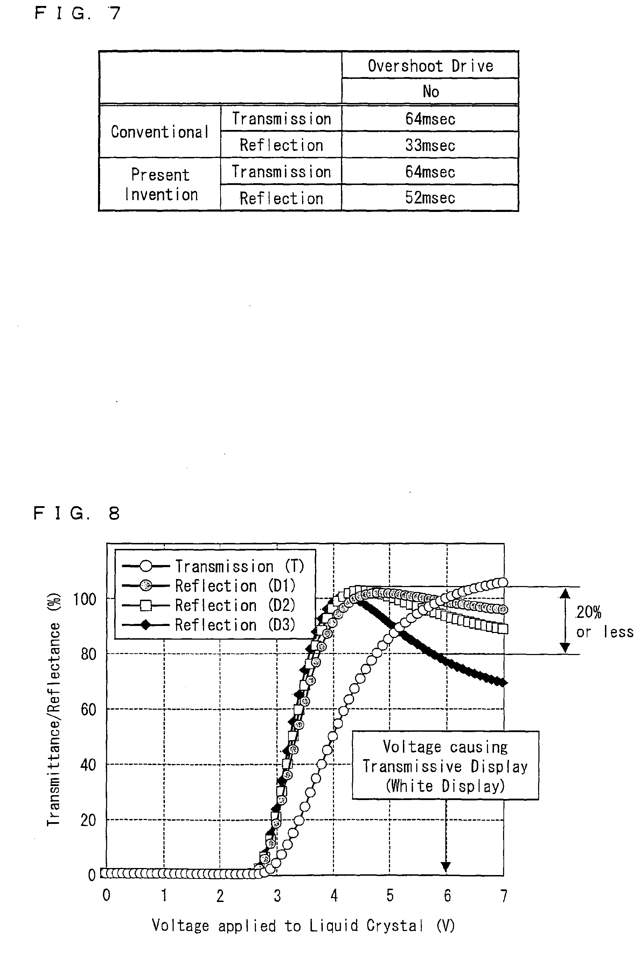

Fig. 7 is diagram comparing one example of the response time shown in Fig. 6 and a response time of a conventional liquid crystal display.
Fig. 8
Fig. 8 is a graph illustrating a voltage-reflectance characteristic in a case where a size of an alignment control section according to the present embodiment is changed.
Fig. 9

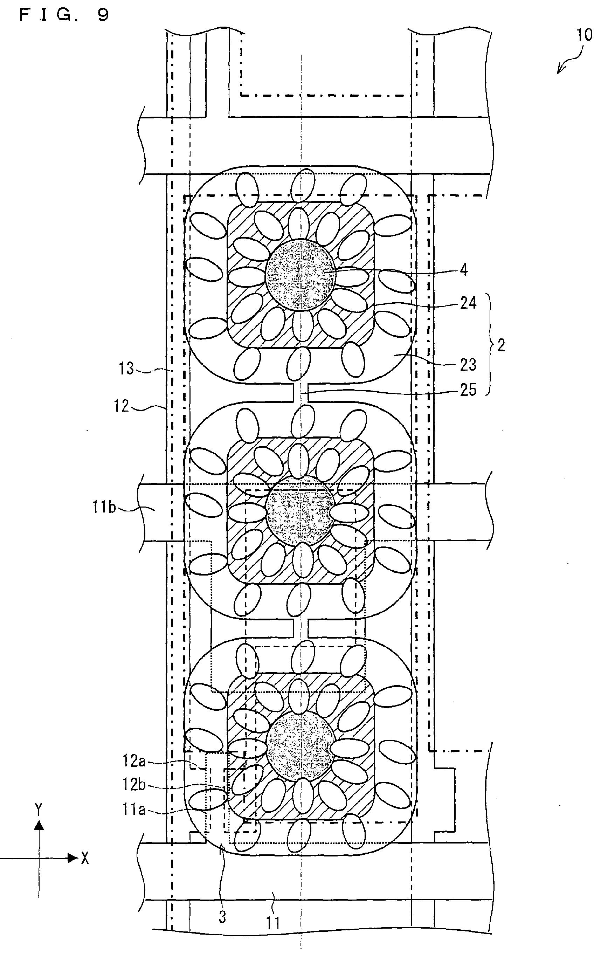

Fig. 9 is a plan view illustrating how liquid crystal molecules are aligned in each of sub-electrodes according to the present embodiment.
Fig. 10

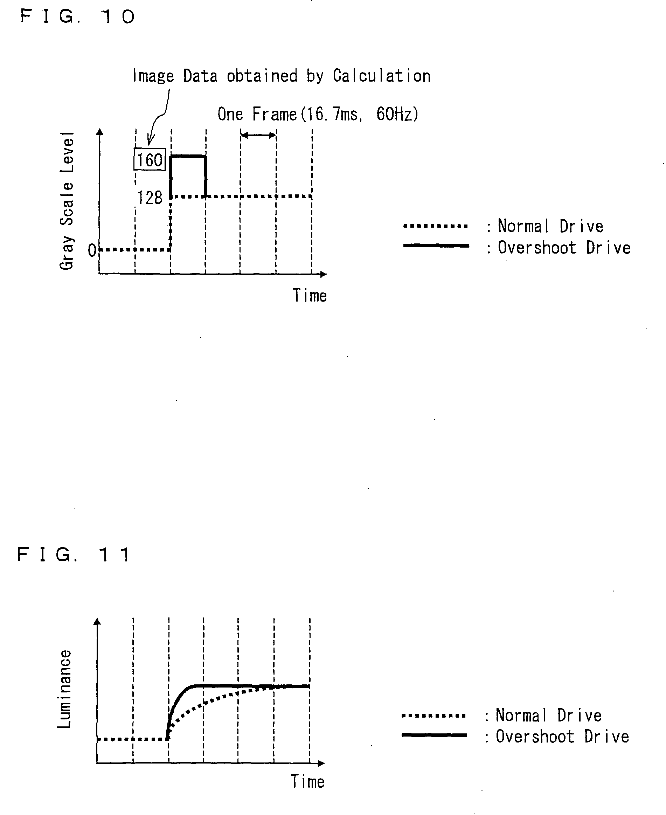

Fig. 10 is a diagram illustrating a relationship between time and gray scale data written into a pixel that is overshoot driven upon conversion of a gray scale level 0 (black) in a previous frame to a gray scale level 128 (halftone) in a current frame.
Fig. 11
Fig. 11 is a waveform chart illustrating a response waveform of liquid crystal, attained by Fig. 10.
Fig. 12

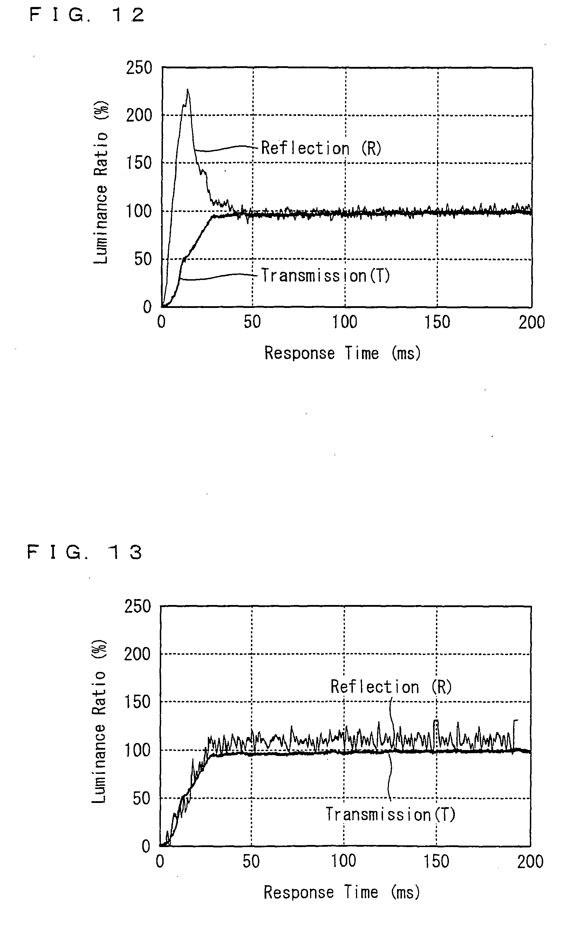

Fig. 12 is a graph illustrating a response waveform when overshoot drive is applied to a conventional liquid crystal display.
Fig. 13
Fig. 13 is a graph illustrating a response waveform when overshoot drive is applied to a liquid crystal display according to the present embodiment.
Fig. 14

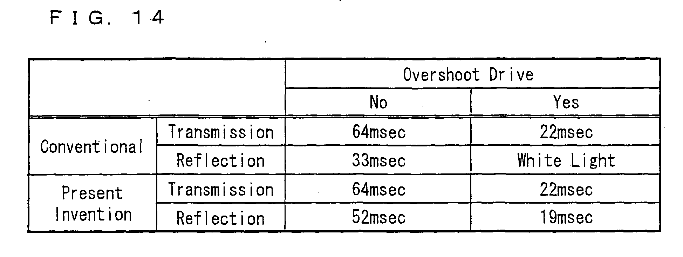

Fig. 14 is a diagram comparing (i) one example of a response time shown in Fig. 13, (ii) a response time in a conventional liquid crystal display, and (iii) a response time shown in Fig. 7.
Fig. 15

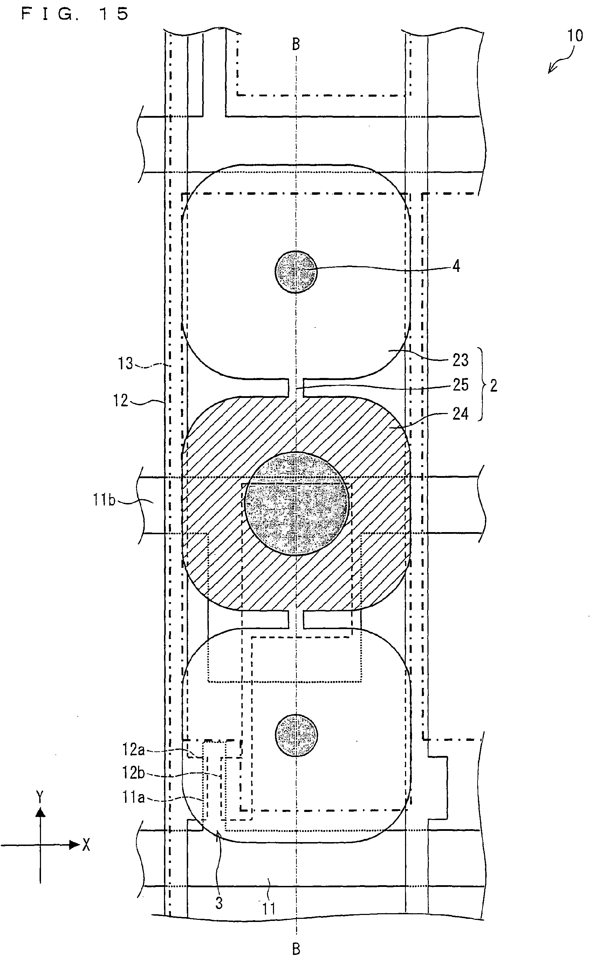

Fig. 15 is a plan view illustrating one pixel in a liquid crystal display serving as Modification 1.
Fig. 16

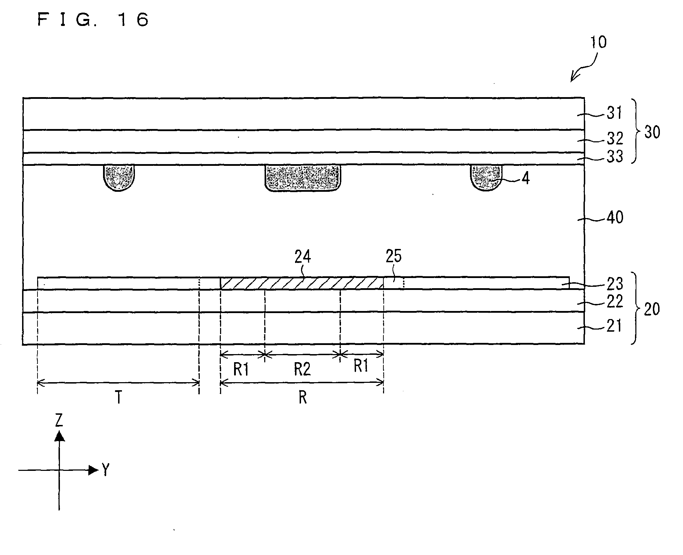

Fig. 16 is a cross-sectional view illustrating a pixel taken on line B-B in Fig. 15.
Fig. 17

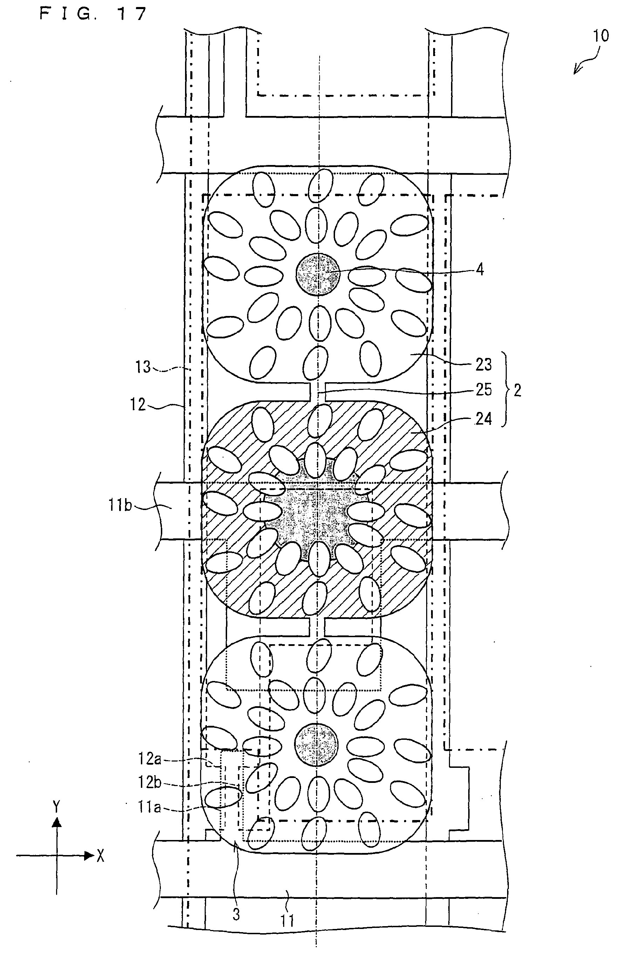

Fig. 17 is a plan view illustrating how liquid crystal molecules are aligned in the pixel shown in Fig. 15.
Fig. 18

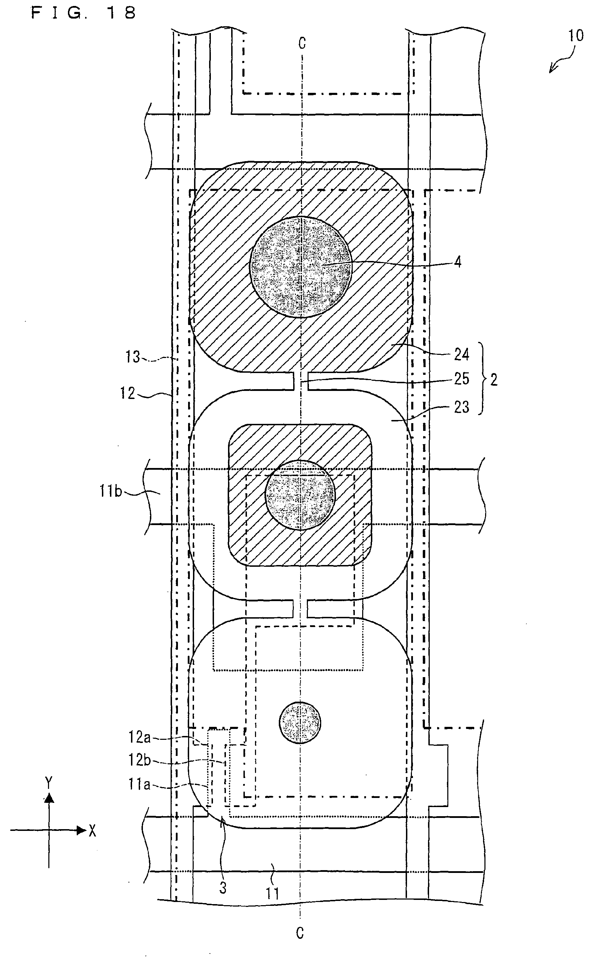

Fig. 18 is a plan view illustrating one pixel in a liquid crystal display serving as Modification 2.
Fig. 19

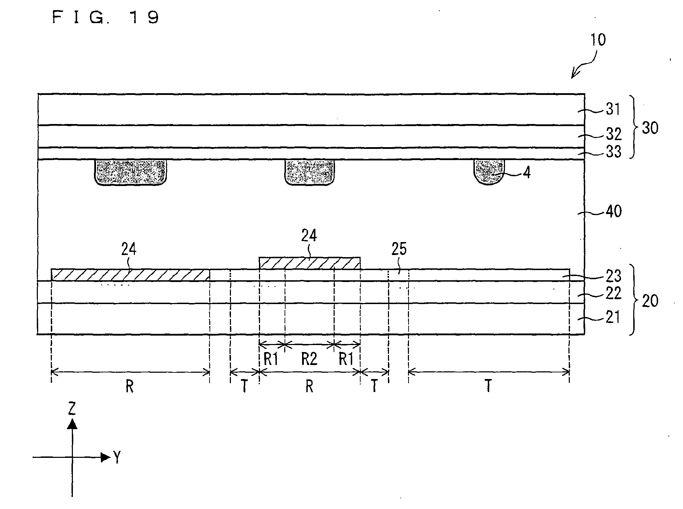

Fig. 19 is a cross-sectional view illustrating a pixel taken on line C-C in Fig. 18.

Fig. 20

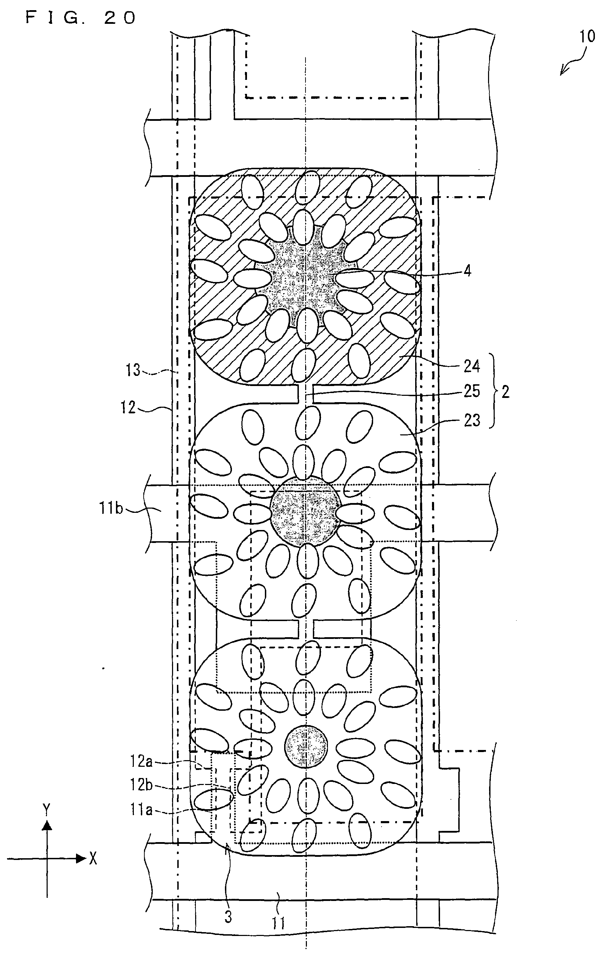

Fig. 20 is a plan view illustrating how liquid crystal molecules are aligned in the pixel shown in Fig. 18.

Fig. 21

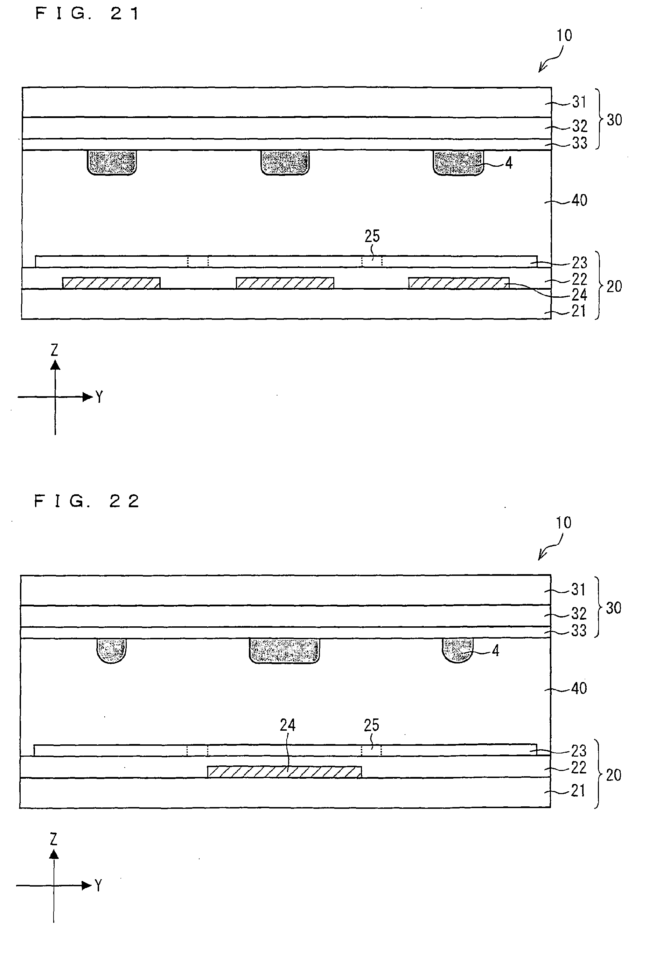

Fig. 21 is a cross-sectional view illustrating one pixel in a liquid crystal display 1 serving as Modification 3.

Fig. 22

Fig. 22 is a cross-sectional view illustrating a pixel in the liquid crystal display illustrated in Modification 1, in a case where a reflective electrode is disposed as a lower layer of a sub-electrode.

Fig. 23

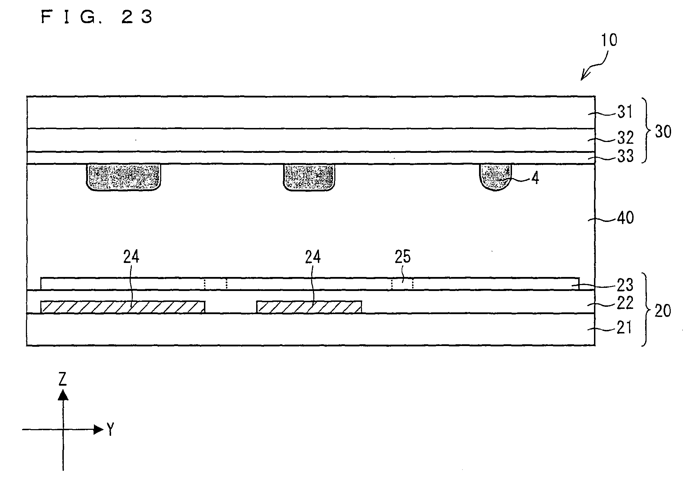

Fig. 23 is a cross-sectional view illustrating a pixel in the liquid crystal display illustrated in Modification 2, in a case where a reflective electrode is disposed as a lower layer of a sub-electrode.

Fig. 24

Fig. 24 is a plan view illustrating one pixel in a conventional liquid crystal display.

Fig. 25

Fig. 25 is a cross-sectional view illustrating a pixel taken on line D-D in Fig. 24.

Fig. 26

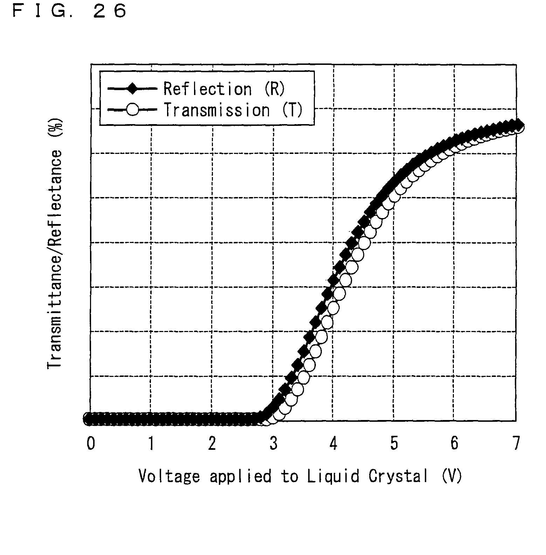

Fig. 26 is a graph illustrating a voltage-reflectance characteristic of a reflective display region and a voltage-transmittance characteristic of a transmissive display region, in a conventional liquid crystal display.

Fig. 27

Fig. 27 is a graph illustrating a relationship between a response time and a luminance ratio of each of the transmissive display region and reflective display region in a conventional liquid crystal display.

Reference Signs List

| | |
|---|---|
| 1 | Liquid crystal display |
| 2 | Pixel electrode |
| 3 | TFT |
| 4 | Alignment control section |
| 10 | Pixel |
| 20 | Active matrix substrate |
| 23 | Sub-electrode (Pixel electrode) |
| 24 | Reflective electrode (Pixel electrode) |
| 30 | Counter substrate |
| 33 | Common electrode |
| 40 | Liquid crystal layer |
| R | Reflective display region |
| R1 | First reflective display region |
| R2 | Second reflective display region |
| T | Transmissive display region |

Description of Embodiments

One embodiment of the present invention is described below with reference to the attached drawings.

The following description schematically explains, with reference to Fig. 3, a configuration of a liquid crystal display to which the present invention is applicable and which includes a transmissive display region and a reflective display region (such a liquid crystal display is hereinafter referred to as "liquid crystal display"). A liquid crystal display 1 shown in Fig. 3 is mainly composed of a liquid crystal display panel 100 and a drive circuit section. The liquid crystal display panel 100 holds liquid crystal composition (liquid crystal layer) between a pair of electrode substrates, and polarizing plates are attached to each of outside surfaces of the electrode substrates.

One of the electrode substrates, which is an active matrix substrate 20 (see Fig. 2), is configured such that a plurality of source signal lines S(1), S(2), ... S(i), ... S(N) and a plurality of gate signal lines G(1), G(2), ... G(j), ... G(M) are provided in a matrix form on a transparent insulating substrate 21 such as glass. At each of intersections of the source signal lines 12 and gate signal lines 11, a thin film transistor (hereinafter referred to as TFT) 3 connected to a pixel electrode 2 is provided. An alignment film (not illustrated) is provided to cover mostly the entire substrate. This thus provides the active matrix substrate 20.

On the other hand, the other of the electrode substrates, which is a counter substrate 30 (see Fig. 2), is constituted by sequentially stacking a common electrode 33 and an alignment film (not illustrated) on a transparent insulating substrate such as glass so as to cover the entire substrate, in the same manner as the active matrix substrate 20. The drive circuit section includes a gate signal line driver circuit 300 which is connected to each of the gate signal lines 11 of the liquid crystal display panel 100, a source signal driver circuit 200 which is connected to each of the source signal lines 12 of the liquid crystal display panel 100, and a common electrode driver circuit COM which is connected to the common electrode 33.

Next, a configuration of the liquid crystal display 1 is described in more details with reference to Figs. 1 and 2. Fig. 1 is a plan view illustrating a pixel 10 included in the active matrix substrate 20. Fig. 2 is a cross-sectional view of the pixel 10 taken on line A-A in Fig. 1.

As illustrated in Fig. 2, the liquid crystal display 1 includes the active matrix substrate 20 and the counter substrate 30 disposed so as to face each other, and a liquid crystal layer 40 held between the active matrix substrate 20 and the counter substrate 30.

As illustrated in Fig. 1, the active matrix substrate 20 includes, on the insulating substrate 21, a plurality of gate signal lines 11 extending in parallel with one another; a plurality of source signal lines 12 extending in parallel with one another along a direction perpendicularly intersecting with the gate signal lines 11; capacitor lines 11b extending in parallel with one another each of which extends between adjacent ones of the gate signal lines 11; TFTs 3 serving as switching elements, each of which is provided at each of intersections of the gate signal lines 11 and the source signal lines 12; and pixel electrodes 2 each of which is provided for each display region (pixel 10) surrounded by adjacent ones of the gate signal lines 11 and adjacent ones of the source signal lines 12. The capacitor lines 11b each have, in every pixel 10, a projecting section projecting sideward.

As illustrated in Fig. 1, each of the TFTs 3 includes a gate electrode 11a which is the projecting section of a corresponding gate signal line 11; a gate insulating film (not illustrated) provided so as to cover the gate electrode 11a; a semiconductor layer (not illustrated) independently provided on the gate insulating film so as to be on a position corresponding to the gate electrode 11a; and a source electrode 12a and a drain electrode 12b provided on the semiconductor layer so as to face each other, the source electrode 12a being a projecting section of the source signal line 12. The drain electrode 12b extends to a region in which a corresponding capacitor line 11b is provided so as to form an auxiliary capacitance between (i) the drain electrode 12b and (ii) the capacitor line 11b and the projecting section thereof.

As illustrated in Fig. 1, each of the pixel electrodes 2 includes: three of sub-electrodes 23 connected with one another in a longitudinal direction via joining sections 25; and round-shaped reflective electrodes 24 provided on the respective sub-electrodes 23. In each of the pixel electrodes 2, regions in which the reflective electrodes 24 are provided constitute reflective display regions R, whereas the sub-electrodes 23 not provided with the reflective electrodes 24 constitute transmissive display regions T.

The active matrix substrate 20 is configured in such a manner that an interlayer insulating film 22 is stacked so as to cover the TFTs 3 and then the pixel electrodes 2 are provided on the interlayer insulating film 22. Each of the pixel electrodes 2 is connected to the drain electrode 12b through a contact hole (not illustrated) of the interlayer insulating film 22.

The counter substrate 30 is configured by sequentially stacking a color filter layer 32, the common electrode 33, and the alignment film (not illustrated) on the insulating substrate 31. In each of the reflective display regions R, an alignment control section 4 having an outline shape smaller than that of each of the reflective electrodes 24 is provided between the common electrode 33 and the alignment film. The alignment control section 4 separates the reflective display region R into regions different from each other in terms of a thickness of the liquid crystal layer 40 (a first reflective display region R1 and a second reflective display region R2). Further, a black matrix 13 is provided so as to cover the gate signal lines 11, the source signal lines 12, and the TFTs 3, which are provided on the active matrix substrate 20. The black matrix 13 constitutes, together with a colored layer provided for each of the pixels 10, the color filter layer 32.

(Voltage-reflectance characteristic)

Next, a configuration of the alignment control section 4 is described in details. Here, as shown in Figs. 1 and 2, a thickness direction of the liquid crystal layer 40 is referred to as a Z axis direction, a direction in parallel with the source signal lines 12 is referred to as a Y axis direction, and a direction in parallel with the gate signal lines 11 is referred to as an X axis direction. Note that in the following description, the liquid crystal display 1 is configured such that a thickness d1 of the liquid crystal layer 40 in the transmissive display region T is 3.4 $\mu$m, a thickness d3 of the liquid crystal layer 40 in the first reflective display region R1 is 3.25 $\mu$m, a thickness d2 of the liquid crystal layer 40 in the second reflective display region R2 is 1.9 $\mu$m, a thickness d4 of the alignment control section 4 is 1.4 $\mu$m, a refractive index anisotropy $\Delta n$ of liquid crystal molecules is 0.098, a dielectric anisotropy $\Delta \varepsilon$ of a liquid crystal material is -3.1, and a dielectric anisotropy $\Delta \varepsilon$ of the alignment control section 4 is 4.

As illustrated in Figs. 1 and 2, the alignment control section 4 has an outline shape smaller than that of each of the reflective electrodes 24, and is provided in substantially a center position of the reflective display region R so that the liquid crystal layer 40 in the reflective display region R is thinner than the liquid crystal layer 40 in the transmissive display region T. More specifically, the alignment control section 4 is set such that a region obtained by projecting (orthogonally projecting) the alignment control section 4 on an X-Y plane is smaller than a region obtained by projecting (orthogonally projecting) the reflective electrode 24 on the X-Y plane, and the thickness (d2) of the liquid crystal layer 40 in the reflective display region R is substantially half the thickness (d1) of the liquid crystal layer 40 in the transmissive display region T.

This makes it possible to separate the reflective display region R of each of the sub-electrodes 23 into two regions different from each other in terms of the thickness of the liquid crystal layer 40. In other words, it is possible to separate the reflective display region R into (i) the first reflective display region R1 in which a distance d3 between the reflective electrode 24 and the common electrode 33 is 3.25 μm and (ii) the second reflective display region R2 in which a distance d2 between the reflective electrode 24 and the alignment control section 4 is 1.9 μm.

According to the configuration, since the reflective display region R is constituted by the two regions different from each other in terms of the thickness of the liquid crystal layer 40, a voltage effectively applied to the liquid crystal layer 40 is different between the two regions. Specifically, in the second reflective display region R2, a voltage outputted to the liquid crystal layer 40 is dropped due to the alignment control section 4 provided between the reflective electrode 24 and the common electrode 33. As a result, a voltage applied to the second reflective display region R2 is lower than the voltage effectively applied to the first reflective display region R1. As such, a voltage-reflectance characteristic of the first reflective display region R 1 and a voltage-reflectance characteristic of the second reflective display region R2 are different from each other. Specifically, since a voltage is less likely to be applied to the second reflective display region R2 in which the alignment control section 4 is disposed than to the first reflective display region R1 a reflectance versus the voltage applied to the second reflective display region R2 is lower than a reflectance versus the voltage applied to the first reflective display region R1.

Fig. 4 shows measurements of a reflectance versus the voltage applied in the liquid crystal display 1 configured as described above, and is a graph illustrating a voltage-reflectance characteristic of each of the first reflective display region R1 and the second reflective display region R2, and a voltage-reflectance characteristic obtained by synthesizing the voltage-reflectance characteristic of each of the first reflective display region R1 and the second reflective display region R2.

As shown in Fig. 4, since the voltage effectively applied to the liquid crystal layer 40 is smaller in the second reflective display region R2 than in the first reflective display region R1 due to voltage drop caused by the alignment control section 4, the reflectance versus the voltage applied is smaller in the second reflective display region R2 than in the first reflective display region R1. On the other hand, the reflectance versus the voltage applied in the first reflective display region R1 is larger than the transmittance in the transmissive display region T. This is because the transmittance and the reflectance are set so as to be identical to each other. Further, in the first reflective display region R1, an inverse phenomenon occurs in which the reflectance decreases according to a voltage applied when the voltage applied is higher than a predetermined voltage, and the reflectance becomes smaller than the reflectance in the second reflective display region R2 and the transmittance in the transmissive display region T. The measurements shown in Fig. 4 also reveal that display properties differ depending on the thickness of the liquid crystal layer 40.

The inverse phenomenon is briefly described as follows. The inverse phenomenon of luminance is generally represented by the following theoretical formula. As understandable from the theoretical formula, since the inverse phenomenon is represented by a periodic function, if Δn · d continuously changes due to a voltage, then the luminance periodically fluctuates between bright and dark.

$$\text{Luminance} = C(1 - (SIN(\pi\ /\ 2\sqrt{(1 - u^2)})\ ^2\ /\ (1 - u))$$

$u = 2d \cdot \Delta n\ /\ \lambda$
C = Constant

The liquid crystal display 1 of the present embodiment is configured such that the reflective display region R is separated into the first reflective display region R1 and the second reflective display region R2. Here, the voltage-reflectance characteristic of the reflective display region R in the reflective mode can be represented as the one obtained by synthesizing the voltage-reflectance characteristic of each of the first reflective display region R1 and the second reflective display region R2.

Fig. 4 shows the voltage-reflectance characteristic of each of the first reflective display region R1 and the second reflective display region R2, and the voltage-reflectance characteristic obtained by synthesizing both the voltage-reflectance characteristic of the first reflective display region R1 and the voltage-reflectance characteristic of the second display region R2. Fig. 5 shows the voltage-reflectance characteristic thus synthesized and the voltage-transmittance characteristic of the transmissive display region T.

As understandable from Fig. 5, the voltage-reflectance characteristic thus synthesized, i.e., the voltage-reflectance characteristic in the reflective display region R, is substantially identical to the voltage-transmittance characteristic in the transmissive display region T. Accordingly, since it is possible to substantially equalize the display properties of each of the reflective display region R and the transmissive display region T, it is possible to prevent deterioration in display quality of the liquid crystal display 1.

As described above, since the reflectance varies depending on the voltage applied to the liquid crystal layer 40, the reflectance is influenced by the configuration of each of the first reflective display region R1 and the second reflective display region R2. That is, the thickness d3 of the liquid crystal layer 40 in the first reflective display region R1 and the thickness d2 of the liquid crystal layer 40 in the second reflective display region R2, and the size of each of the first reflective display region R1 and the second reflective display region R2 influence the reflectance. Accordingly, the reflectance varies depending on the size of the alignment control section 4. For example, the reflectance decreases as the thickness d4 of the alignment control section 4 increases, whereas the reflectance increases as the thickness d4 of the alignment control section 4 decreases.

Therefore, in the liquid crystal display 1 according to the present embodiment, the alignment control section 4 is preferably configured such that the voltage-reflectance characteristic obtained by synthesizing the voltage-reflectance characteristic in the first reflective display region R1 and the voltage-reflectance characteristic in the second reflective display region R2 is substantially equal to the voltage-transmittance characteristic in the transmissive display region T.

(Response Speed)

Next, a response speed in the liquid crystal display 1 is described as follows. First, a theoretical formula representing the response speed in the liquid crystal display 1 is described as follows:

Formula 1

$$\tau_{off} = \gamma_1 d^2 / k\pi^2$$

$$\tau_{on} = \tau_{off} / \left\{ \left( V^2 / V^2_{th} \right) - 1 \right\}$$

$$V_{th} = \pi\sqrt{k / \Delta\varepsilon}$$

wherein $\tau_{off}$ is a response time from white to black, $\tau_{on}$ is a response time from black to white, $\gamma 1$ is a viscosity of a liquid crystal material, d is a thickness of a cell (liquid crystal layer), V is a voltage applied to the liquid crystal layer, $V_{th}$ is a threshold voltage of the liquid crystal layer, k is an elastic constant of liquid crystal, and $\Delta\varepsilon$ is dielectric anisotropy of the liquid crystal material.

As shown in Formula 1, the response speed is correlated with the voltage applied to the liquid crystal layer 40 and the thickness of the liquid crystal layer 40. For example, if the thickness of the liquid crystal layer 40 becomes 1/2, the response speed increases four times, theoretically.

The liquid crystal display 1 according to the present embodiment is configured such that the reflective display region R is separated into the first reflective display region R1 and the second reflective display region R2, and the thickness d3 of the liquid crystal layer 40 in the first reflective display region R1 and the thickness d1 of the liquid crystal layer 40 in the transmissive display region T are substantially identical. Accordingly, as clearly understandable from Formula 1, the response speed in the first reflective display region R1 and the response speed in the transmissive display region T are substantially equal to each other.

On the other hand, since the second reflective display region R2 is provided with the alignment control section 4, the thickness d2 of the liquid crystal layer 40 in the second reflective display region R2 is smaller than the thickness d1 of the liquid crystal layer 40 in the transmissive display region T and the thickness d2 of the liquid crystal layer 40 in the reflective display region R2. Therefore, as shown in Formula 1, the response speed in the first reflective display region R1 is higher than the response speed in the second reflective display region R2, theoretically. However, in the second reflective display region R2, the voltage effectively applied to the liquid crystal 40 is small due to the voltage drop caused by the alignment control section 4 as described above. Accordingly, the response speed in the second reflective display region R2 does not increase, so that the response speed does not satisfy the relational expression shown in Formula 1.

As described above, even if the liquid crystal layer 40 is made thinner, the response speed does not increase because the voltage applied to the liquid crystal layer 40 decreases. Accordingly, it is possible to make the response speed of the reflective display region R obtained by synthesizing the first reflective display region R1 and the second reflective display region R2 close to the response speed in the transmissive display region T.

Fig. 6 is a graph illustrating a relation between the response time and a luminance ratio of each of the transmissive display region T and the reflective display region R, of the liquid crystal display 1 according to the present embodiment. The graph shows measurements of the liquid crystal display 1 under the above-described condition.

As understandable from Fig. 6, the response speed in the reflective display region R is close to the response speed in the transmissive display region T, compared to the conventional configuration (response waveform shown in Fig. 27).

Fig. 7 is a diagram comparing an example of the response time shown in Fig. 6 and a response time of the conventional liquid crystal display, and shows a response time when a gray scale level is changed from a gray scale level 0 to a gray scale level 32 in a liquid crystal display of 256 gray scale levels. As understandable from the diagram, in the conventional liquid crystal display, the response time (33 msec) in the reflective display region R was approximately half the response time (64 msec) in the transmissive display region T. However, in the liquid crystal display 1 according to the present invention, the response time (52 msec) in the reflective display region R is close to the response time (64 msec) in the transmissive display region T. As such, it is possible to improve the difference in the response speed which has been conventionally a problem.

As described above, in the liquid crystal display 1 according to the present embodiment, the alignment control section 4 is provided between the reflective electrode 24 and the common electrode 33 in the reflective display region R. The alignment control section 4 makes the thickness of the liquid crystal layer 40 in the reflective display region R smaller than the thickness d1 of the liquid crystal layer 40 in the transmissive display region T and the thickness d3 of the liquid crystal layer 40 in the reflective display region R1, as well as controls an alignment direction of liquid crystal molecules in the liquid crystal layer 40.

As a result, the voltage effectively applied to the liquid crystal layer 40 in the reflective display region R is smaller than the voltage effectively applied to the liquid crystal layer 40 in the transmissive display region T, due to the voltage drop. Therefore, even if the liquid crystal layer 40 is made thinner by an alignment control section, it is possible to prevent the response speed from increasing. As such, it is possible to make the response speed in the reflective display region R close to a response speed in a case where no alignment control sections are provided, i.e., the response speed in the transmissive display region T.

Further, the alignment control section 4 is set such that a region obtained by projecting (orthogonally projecting) the alignment control section 4 on a surface of the active matrix substrate 20 is smaller than a region obtained by projecting (orthogonally projecting) the reflective electrode 24 on the surface of the active matrix substrate 20. Thus, it is possible to substantially equalize the display properties (contrast) in the reflective mode and the transmissive mode so as to prevent deterioration in display quality, and to substantially equalize the response speed in each of the reflective mode and the transmissive mode.

(Configuration of Alignment Control Section)

Next, a configuration of the alignment control section 4 that is usable in the prevent invention is described as follows. As described above, since the alignment control section 4 is provided between the reflective electrode 24 and the common electrode 33, a voltage is less likely to be applied to the second reflective display region R2 in which the alignment control section 4 is provided than to the first reflective display region R1. Therefore, the reflectance versus the voltage applied in the second reflective display region R2 is smaller than the reflectance versus the voltage applied in the first reflective display region R1. In other words, the reflectance is influenced by the thickness d2 of the liquid crystal layer 40 to which the voltage is applied, that is, the reflectance decreases as a thickness d4 of the alignment control section 4 increases, whereas the reflectance increases as the thickness d4 of the alignment control section 4 decreases. As such, the size of the alignment control section 4 influences the voltage-reflectance characteristic, and thereby influences display quality.

Here, a result of a measurement of a reflectance characteristic in a case where the size of the alignment control section 4 is changed is described as follows with reference to Fig. 8. In this experiment, three types of alignment control sections 4 (type D1, type D2, and type D3) were used for the measurement. The alignment control sections 4 have respective thicknesses d4 (in a Z axis direction) which satisfy a relational expression of D1 > D2 > D3. As shown in Fig. 8, it was found that an inverse reflectance increases as the thickness d4 of the alignment control section 4 increases. According to a diffuse reflectometer (LCD-5200, OTSUKA ELECTRONICS CO., LTD) for measuring a reflectance characteristic, a reflection contrast in the liquid crystal display 1 ranges from 5 : 1 to 10 : 1. This revealed that 20% of reflectance during white display was not visible as an inversed display.

Generally, in a case of a video signal of NTSC, only gray scale signals of gray scale levels 16 to 235 are used among those of 256 gray scale levels. Gray scale signals of gray scale levels 236 or higher, that is, gray scale levels whose luminance ratio (reflectance ratio) is 84% or more do not contribute to display.

That is, as long as a ratio of the inverse reflectance to a maximum reflectance is 20% or less, the inverse reflectance does not influence display quality. For the reasons described above, in the liquid crystal display 1 according to the present embodiment, the alignment control section 4 is preferably configured such that in the gray scale levels that contribute to display, a ratio of the inverse reflectance to the maximum reflectance in the voltage-reflectance characteristic in the reflective display region R obtained by synthesizing the first reflective display region R1 and the second reflective display region R2 is 20% or less.

As described above, the alignment control section 4 influences the voltage applied to the liquid crystal layer 40 and the reflectance characteristic. Meanwhile, the alignment control section 4 has a function of controlling alignment of the liquid crystal molecules. Fig. 9 is a plan view illustrating how the liquid crystal molecules are aligned in each of sub-electrodes 23. As illustrated in Fig. 9, the liquid crystal molecules are aligned in a radial pattern in all directions around the alignment control section 4 while a voltage is applied. This makes it possible to broaden a viewing angle, thereby improving display quality.

(Overshoot Drive)

Meanwhile, a liquid crystal display has conventionally employed a so-called overshoot drive as a technique of improving a response speed when displaying halftones.

The overshoot drive is performed as follows: for example, when changing an initial luminance of an initial gray scale level 0 to a target luminance of a target gray scale level 64, a voltage corresponding to a luminance higher than the target luminance is applied to the liquid crystal layer for a short period of time. Since this results in a high voltage being applied to the liquid crystal layer, it is possible to shorten the response time taken for the change to the target luminance. Specifically, as shown in Fig. 10, corrective data, which is calculated from a relation obtained by comparing data of a current frame and data of one frame before the current frame, is applied. The relation specifically means "to apply a gray scale level which has a larger difference from the gray scale level of the one frame before the current frame (hereinafter referred to as "previous frame") than the gray scale level of input data of the current frame does". For example, it means such a drive whereby a gray scale level V160 is applied in a case where a gray scale level of the previous frame is V0 and the gray scale level of the input data of the current frame is V128. Applying such a gray scale value allows a liquid crystal response waveform in which a rising edge comes early (see Fig. 11).

However, if such an overshoot drive is applied to a conventional semi-transmissive liquid crystal display, the following problem occurs. Fig. 12 is a graph illustrating a response waveform in the case where the overshoot drive is applied to a conventional liquid crystal display.

In other words, in a case where the overshoot drive, which is suitable for the transmissive display region T (see Fig. 27) in which the response speed is lower than in the reflective display region R, is applied to the conventional liquid crystal display, it is possible to improve a slow response speed in the transmissive display region T (see Fig. 12). However, in the reflective display region R in which the response speed is originally high, application of the overshoot drive further increases the response speed, and in addition, causes image deterioration due to such as an angular response in which a sharp angle (over luminance, which is higher than the target luminance) appears before reaching the target luminance. Because of such a sharp angle representing the luminance higher than the target luminance, display looks whitish momentarily.

As described above, if the overshoot drive suitable for a response characteristic of the transmissive display region T is performed, the voltage applied to the reflective display region R is too high. As a result, a white after image appears especially when displaying halftones. On the other hand, if the overshoot drive suitable for a response characteristic of the reflective display region R is performed, it is not possible to sufficiently improve the response speed in the transmissive display region T. As a result, a black after image appears when displaying halftones. Therefore, it is not possible for the conventional liquid crystal display to employ the overshoot drive under an identical condition, and is necessary to perform the overshoot drive under different conditions suitable for each of the transmissive display region T and the reflective display region R. This makes the configuration of the liquid crystal display complicated, and a cost of the liquid crystal display increases.

In contrast, since the liquid crystal display 1 according to the present embodiment is configured such that the reflective display region R is separated into the second reflective display region R2 in which the thickness of the liquid crystal layer 40 is small (thin) and the first reflective display region R1 in which the thickness of the liquid crystal 40 is larger (thicker) than the liquid crystal layer 40 in the second reflective display region R2, and therefore it is possible to substantially equalize the response waveform of each of the reflective display region R and the transmissive display region T when a normal drive is performed as described above. Accordingly, even if the overshoot drive is applied to the reflective display region R and the transmissive display region T under the identical condition, the angular response that is large enough to significantly drop display quality (e.g., residual images) does not occur unlike the conventional configuration. As such, it is possible to improve the response speed in each of the reflective display region R and the transmissive display region T.

Fig. 13 is a graph illustrating a response waveform in a case where the overshoot drive is applied to the liquid crystal display 1. The graph shows that it is possible to improve the response speed both in the reflective display region R and the transmissive display region T in an identical manner, compared to Fig. 6 illustrating the response waveform in a case where a normal drive is performed without using the overshoot drive.

Fig. 14 is a diagram comparing (i) an example of the response time shown in Fig. 13, (ii) the response time in the conventional liquid crystal display, and (iii) the response time shown in Fig. 7. These response times are those in a case where the gray scale level was changed from the gray scale level 0 to the gray scale level 32 in the liquid crystal display 1 of 256 gray scale levels. As shown in the diagram, in the transmissive display region T of the conventional liquid crystal display, it is possible to improve the response speed because the response time of 64 msec in the normal drive was improved to the response time of 22 msec in the overshoot drive. On the other hand, in the reflective display region R, the angular response (white light) occurs when the overshoot drive is performed, and the response time is immeasurable.

In contrast, in the transmissive display region T of the liquid crystal display 1 according to the present embodiment, the response time of 64 msec in the normal drive was improved to the response time of 22 msec in the overshoot drive, whereas in the reflective display region R, the response time of 52 msec in the normal drive was improved to the response time of 19 msec in the overshoot drive. As such, by additionally applying the overshoot drive to the liquid crystal display 1 according to the present embodiment, it is possible to further improve the response speed.

A gray scale value according to which a voltage higher than a voltage for a normal target gray scale is applied for performing the overshoot drive, i.e., the gray scale value calculated from a relation between a gray scale level before being changed and a gray scale level after being changed, can be obtained through a calculation. However, the gray scale value is obtained not only by the calculation, but also by using a lookup table.

Modification 1

In regard to the configuration of the liquid crystal display 1 according to the present embodiment, a modification of the configuration illustrated in Figs. 1 and 2 is described as follows. Fig. 15 is a plan view illustrating a pixel 10 in a liquid crystal display 1 serving as Modification 1. Fig. 16 is a cross-sectional view of the pixel 10 taken on line B-B in Fig. 15. Fig. 17 is a plan view illustrating how liquid crystal molecules are aligned in the pixel 10.

In the configuration illustrated in Figs. 1 and 2, each of a plurality of sub-electrodes 23 which constitute a pixel electrode 2 includes a reflective display region R and a transmissive display region T. However, in a configuration of Modification 1, as illustrated in Figs. 15 and 16, each of the sub-electrodes 23 is constituted by one of the reflective display region R and the transmissive display region T, and at least one of the sub-electrodes 23 is constituted by the reflective display region R.

According to the configuration as described above, a sub-electrode 23 constituted by the reflective display region R includes only the reflective electrode 24, whereas a sub-electrode 23 constituted by the transmissive display region T includes no reflective electrode 24. Therefore, it is possible to efficiently form the reflective display region R and the transmissive display region T on a layer in which TFTs 3, gate signal lines 11, and source signal lines 12 are provided. As a result, it is possible to improve the reflectance and the transmittance of the liquid crystal display 1.

The liquid crystal display 1 of Modification 1 is preferably configured such that the alignment control section 4 in the reflective display region R is larger than the alignment control section 4 in the transmissive display region T. Since this makes it possible to more decrease the voltage applied to the liquid crystal layer 40 in the second reflective display region R2 as the thickness d4 of the alignment control section 4 increases as described above, it is possible to make the response speed in the reflective display region R close to the response speed in the transmissive display region T.

Modification 2

In regard to the configuration of the liquid crystal display 1 according to the present embodiment, another modification of the configuration illustrated in Figs. 1 and 2 is described as follows. Fig. 18 is a plan view illustrating a pixel 10 of the liquid crystal display 1 serving as Modification 2. Fig. 19 is a cross-sectional view illustrating the pixel 10 taken on line C-C in Fig. 18. Fig. 20 is a plan view illustrating how liquid crystal molecules in the pixel 10 are aligned.

The liquid crystal display 1 of Modification 2 is configured such that each of the sub-electrodes 23 has a different configuration in terms of the reflective display region R and the transmissive display region T. Specifically, as illustrated in Figs. 18 and 19, in a case where the pixel electrode 2 includes a first sub-electrode 23, a second sub-electrode 23, and a third sub-electrode 23, the first sub-electrode 23 is constituted by the reflective display region R, the second sub-electrode 23 is constituted by the reflective display region R and the transmissive display region T in the same manner as the configuration illustrated in Figs. 1 and 2, and the third sub-electrode 23 is constituted by the transmissive display region T.

In the configuration of Modification 2, a size of the alignment control section 4 is determined preferably based on the display region that constitutes each of the sub-electrodes 23. Specifically, the size of the alignment control section 4 of each of the sub-electrodes 23, that is, an area of the common electrode 33 that the alignment control section 4 occupies preferably satisfies a relational expression of: the first sub-electrode 23 > the second sub-electrode 23 > the third sub-electrode 23. This makes it possible to substantially equalize the display properties and the response speed in all regions.

Modification 3

In regard to the liquid crystal display 1 according to the present embodiment, yet another modification of the configuration illustrated in Figs. 1 and 2 is described as follows. Fig. 21 is a cross-sectional view illustrating a pixel 10 of the liquid crystal display 1 serving as Modification 3.
In the configuration illustrated in Figs. 1 and 2, the reflective electrode 24 is provided on the sub-electrode 23; however, the liquid crystal display 1 of Modification 3 is configured such that the reflective electrode 24 is provided as a lower layer of the sub-electrode 23.
According to the above configuration, wire electrodes provided below the sub-electrode 23, such wire electrodes as the gate signal lines 11 and the source signal lines 12, can be utilized as the reflective electrode 24. Thus, it is possible to reduce cost of the liquid crystal display 1. It is also possible to simplify the manufacturing process.
The configuration of Modification 3 is also applicable to the configurations of Modifications 1 and 2. Figs. 22 and 23 illustrate a configuration of Modification 1 in which the reflective electrode 24 is disposed as the lower layer of the sub-electrode 23 and a configuration of Modification 2 in which the reflective electrode 24 is disposed as the lower layer of the sub-electrode 23, respectively. This makes it possible to achieve an effect of cost reduction, as well as to achieve the effects attained by the configurations of Modifications 1 and 2.
As illustrated in the embodiment and modifications, the reflective electrode 24 provided in the reflective display region R may be disposed inside the pixel electrode 2, and also may be disposed on the pixel electrode 2 or as the lower layer of the pixel electrode 2. According to a configuration in which the reflective electrode 24 is disposed inside the pixel electrode 2, it is possible to equalize (i) a distance between the reflective electrode 24 and the common electrode 33 and (ii) a distance between the pixel electrode 2 and the common electrode 33. Further, according to a configuration in which the reflective electrode 24 is disposed on the pixel electrode 2 or as the lower layer of the pixel electrode 2, it is possible to substantially equalize (i) the distance between the reflective electrode 24 and the common electrode 33 and (ii) the distance between the pixel electrode 2 and the common electrode 33.
As described above, a liquid crystal display of the present invention includes: the plurality of pixel electrodes being provided at a constant gap from the common electrode, the plurality of pixels each having a reflective display region and a transmissive display region provided around the reflective display region, the reflective display region for performing display of a reflective mode by reflecting outside light with a reflective electrode provided on the active matrix substrate, and the transmissive display region for performing display of a transmissive mode by transmitting light emitted by a light source, the reflective display region including an alignment control section which makes the liquid crystal layer thinner in a part of the reflective display region than in the transmissive display region and which controls an alignment direction of the liquid crystal molecules in the liquid crystal layer.
With this configuration, since the alignment control section separates the reflective display region into two regions different from each other in terms of a thickness of the liquid crystal layer, a voltage effectively applied to the liquid crystal layer is different between the two regions. Further, each of the pixel electrodes is disposed at a constant gap from the common electrode.
Accordingly, in a liquid crystal display of a CPA mode which includes the transmissive display region and the reflective display region, it is possible to prevent deterioration in display quality of a transmissive mode and a reflective mode, as well as to substantially equalize response speed in each of the transmissive mode and the reflective mode.
The embodiments discussed in the foregoing description of embodiments and concrete examples serve solely to illustrate the technical details of the present invention, which should not be narrowly interpreted within the limits of such embodiments and concrete examples, but rather may be applied in many variations within the spirit of the present invention, provided such variations do not exceed the scope of the patent claims set forth below.

Industrial Applicability

The present invention makes it possible to improve a difference between response speed in a reflective mode and response speed in a transmissive mode without deteriorating display quality. Therefore, the present invention is suitable for a liquid crystal display of a CPA mode which is mounted on a mobile device.

**Claims**

1. A liquid crystal display of a vertical alignment mode, comprising:

    an active matrix substrate including a plurality of pixel electrodes;
    a counter substrate provided so as to face the active matrix substrate, the counter substrate including a common electrode;
    a liquid crystal layer held between the active matrix substrate and the counter substrate, the liquid crystal layer containing liquid crystal molecules; and
    a plurality of pixels arranged in a matrix form,
    the liquid crystal display employing a CPA mode in which the liquid crystal molecules are aligned substantially perpendicular to surfaces of the active matrix substrate and the counter substrate while no voltage is applied to the liquid crystal layer whereas the liquid crystal molecules are aligned in a radial pattern while a voltage is applied to the liquid crystal layer,
    the plurality of pixel electrodes being provided at a constant gap from the common electrode,
    the plurality of pixels each having a reflective display region and a transmissive display region provided around the reflective display region, the reflective display region for performing display of a reflective mode by reflecting outside light with a reflective electrode provided on the active matrix substrate, the transmissive display region for performing display of a transmissive mode by transmitting light emitted by a light source,
    the reflective display region including an alignment control section which makes the liquid crystal layer thinner in a part of the reflective display region than in the transmissive display region and which controls an alignment direction of the liquid crystal molecules in the liquid crystal layer.

2. The liquid crystal display according to claim 1, wherein:

    the alignment control section separates the reflective display region into a first reflective display region and a second reflective display region different from each other in terms of a thickness of the liquid crystal layer, and a voltage-reflectance characteristic obtained by synthesizing a voltage-reflectance characteristic in the first reflective display region and a voltage-reflectance characteristic in the second reflective display region is substantially identical to a voltage-transmittance characteristic in the transmissive display region.

3. The liquid crystal display according to claim 1 or claim 2, wherein:

    each of the pixel electrodes in the pixels is separated into a plurality of sub-electrodes, and
    at least one of the plurality of sub-electrodes includes (i) the reflective display region for performing display of the reflective mode by reflecting outside light with the reflective electrode provided on the active matrix substrate and (ii) the transmissive display region, provided around the reflective display region, for performing display of the transmissive mode.

4. The liquid crystal display according to claim 1 or claim 2, wherein:

    each of the pixel electrodes in the pixels is separated into a plurality of sub-electrodes, and
    each of the plurality of sub-electrodes is constituted by one of (i) the reflective display region for performing display of the reflective mode by reflecting outside light with the reflective electrode provided on the active matrix substrate, and (ii) the transmissive display region, provided around the reflective display region, for performing display of the transmissive mode.

5. The liquid crystal display according to any one of claims 1 to 4, wherein:

    the alignment control section separates the reflective display region into a first reflective display region and a second reflective display region different from each other in terms of a thickness of the liquid crystal layer, and is configured such that in gray scale levels that contribute to display, a ratio of an inverse reflectance to a maximum reflectance in a voltage-reflectance characteristic obtained by synthesizing a voltage-reflectance characteristic in the first reflective display region and a voltage-reflectance characteristic in the second reflective display region is 20 percentage or less.

6. The liquid crystal display according to any one of claims 1 to 5, wherein:

the transmissive display region includes an alignment control section for controlling an alignment direction of the liquid crystal molecules in the liquid crystal layer, and

a size of the alignment control section in the reflective display region and a size of the alignment control section in the transmissive display region are determined depending on a size of the reflective display region and a size of the transmissive display region, respectively.

7. The liquid crystal display according to any one of claims 4 to 6, wherein the reflective electrode is provided as a lower layer of each of the sub-electrodes.

8. The liquid crystal display according to any one of claims 1 to 7, which employs an overshoot drive.

FIG. 1

F I G. 2

F I G. 3

F I G. 4

Voltage applied to Liquid Crystal (V)

F I G. 5

Voltage applied to Liquid Crystal (V)

F I G. 6

FIG. 7

|  |  | Overshoot Drive |
| --- | --- | --- |
|  |  | No |
| Conventional | Transmission | 64msec |
|  | Reflection | 33msec |
| Present Invention | Transmission | 64msec |
|  | Reflection | 52msec |

FIG. 8

F I G. 9

FIG. 10

Image Data obtained by Calculation

One Frame(16.7ms, 60Hz)

Gray Scale Level

160
128

0

Time

·········· : Normal Drive
―――― : Overshoot Drive

FIG. 11

Luminance

Time

·········· : Normal Drive
―――― : Overshoot Drive

FIG. 12

FIG. 13

F I G. 1 4

| | | Overshoot Drive | |
|---|---|---|---|
| | | No | Yes |
| Conventional | Transmission | 64msec | 22msec |
| | Reflection | 33msec | White Light |
| Present Invention | Transmission | 64msec | 22msec |
| | Reflection | 52msec | 19msec |

FIG. 15

FIG. 16

FIG. 17

10

4

13

12

23
25    2
24

11b

12a
12b
11a

Y

X

3    11

F I G.  1 8

F I G. 1 9

F I G. 2 0

FIG. 21

FIG. 22

F I G. 2 3

FIG. 24

D

Y
X

D

F I G. 2 5

Common Electrode

Liquid Crystal Layer

Pixel Electrode

d1

d2

Transmissive Display Region (T)

Reflective Display Region (R)

Z

Y

F I G. 2 6

FIG. 27

**INTERNATIONAL SEARCH REPORT**

| International application No. |
|---|
| PCT/JP2008/052334 |

| A. CLASSIFICATION OF SUBJECT MATTER |
|---|
| *G02F1/1335*(2006.01)i, *G02F1/1337*(2006.01)i, *G02F1/1368*(2006.01)i |

According to International Patent Classification (IPC) or to both national classification and IPC

| B. FIELDS SEARCHED |
|---|

Minimum documentation searched (classification system followed by classification symbols)
G02F1/1335, G02F1/1337, G02F1/1368

Documentation searched other than minimum documentation to the extent that such documents are included in the fields searched

| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| X<br>Y | JP 2004-198920 A (Seiko Epson Corp.),<br>15 July, 2004 (15.07.04),<br>Par. Nos. [0033] to [0045], [0057], [0058];<br>Figs. 2 to 5, 9<br>& US 2004/165129 A1 & CN 1510462 A<br>& KR 2004055666 A | 1,2,5,6<br>3,4,7,8 |
| Y | JP 2006-078742 A (Seiko Epson Corp.),<br>23 March, 2006 (23.03.06),<br>Par. Nos. [0026], [0039] to [0044]; Figs. 7 to 9<br>& US 2006/050212 A1 & CN 1746751 A<br>& KR 2006-051115 A | 3 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>28 February, 2008 (28.02.08) | Date of mailing of the international search report<br>11 March, 2008 (11.03.08) |
|---|---|
| Name and mailing address of the ISA/<br>Japanese Patent Office | Authorized officer |
| Facsimile No. | Telephone No. |

Form PCT/ISA/210 (second sheet) (April 2007)

# EP 2 151 708 A1

## INTERNATIONAL SEARCH REPORT

International application No.

PCT/JP2008/052334

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2005-049687 A  (Seiko Epson Corp.),<br>24 February, 2005 (24.02.05),<br>Par. Nos. [0038] to [0040]; Fig. 3<br>& EP 1505428 A1          & US 2005/036088 A1<br>& CN 1584674 A | 4,7 |
| Y | WO 2006/126322 A1  (Sharp Corp.),<br>30 November, 2006 (30.11.06),<br>Par. Nos. [0001], [0002]<br>(Family: none) | 8 |

Form PCT/ISA/210 (continuation of second sheet) (April 2007)

40

**EP 2 151 708 A1**

**REFERENCES CITED IN THE DESCRIPTION**

**Patent documents cited in the description**

- JP 2006078524 A